# EUROPEAN PATENT APPLICATION

(11) **EP 4 513 262 A1**
(43) Date of publication of application: **26.02.2025**
(21) Application number: 24185338.1
(22) Date of filing: 28.06.2024
(51) Int. Cl.: G02F 1/13357

(54) **A BACKLIGHT IMAGE DISPLAY DEVICE**

(30) Priority: 22.08.2023 TR 202310195
(71) Applicant: Arçelik Anonim Sirketi, 34445 Istanbul (TR)
(72) Inventor: SARIBIYIK, OLCAY, 34445 ISTANBUL (TR); DEMIR, SINAN, 34445 ISTANBUL (TR); YOLACAN, EREN, 34445 ISTANBUL (TR); IC, SERLIN, 34445 ISTANBUL (TR)

(57) **Abstract**

The present invention relates to an image display device comprising at least one light source (7); a back cover (1) having a first base (2) whereon the light source (7) is fixed and first side walls (3) surrounding said first base (2); a reflector (4) having a second base (5) and second side walls (6) surrounding said second base (5) and having the same number of light source holes (8) as the light source (7) allowing the light source (7) fixed on the back cover (1) to pass to the other side of the reflector (4); at least two adjacent fixing holes (9) on the second base (5) on the reflector (4); and at least one fixing member (11) remaining between the reflector (4) and the back cover (1) and fixed to the fixing holes (9) and the second side walls (6).

## Description

The present invention relates to a backlight image display device.

In state-of-the-art televisions with LCD panels, a light source is required since the panel cannot produce its own light. Therefore, there is an optical mechanism, preferably with an LED light source, to supply light for the LCD panel.

Any glare, irregularity or darkness anywhere on the television adversely affects the user and causes various problems in terms of quality perception and image.

Backlight image display devices, such as LCD televisions, comprise an illumination unit to provide effective backlighting. The illumination unit generally comprises light sources, a diffuser and a reflector. The reflector reflects the rays emitted from the light source onto the surface where the image is formed, that is, the screen, thus ensuring effective use of the light source. Consequently, the reflectors improve the imaging quality by improving the uniformity of brightness. Difficulties in fixing the reflector on the back cover, the slipping or deformation thereof cause the image quality to be adversely affected. Therefore, the reflectors must be mounted in a correct, simple and quick manner.

In embodiments where reflective lenses are used, the rays from the light source are reflected from the reflector onto the panel. Therefore, in embodiments where reflective lenses are used, fluctuations on the surface of the reflector directly affect the image quality. For this reason, the reflector must be fixed properly on the back cover.

In the state of the art, the reflector is fixed on the back cover with adhesive tape. However, since this process is carried out by operators on the advancing production line during the production process, it takes quite a long time, increasing the risk of operator-related errors.

In addition, since details such as U-shape, traces and elevations cannot be made on the back cover, it is not always possible to attach the adhesive tape completely and smoothly, which prevents the reflector from being fitted properly, causing a decrease in image quality. Even in cases where the adhesive tape is attached properly, the operator's failure to attach the reflector properly causes deteriorations in the image quality.

However, in cases where the reflector needs to be detached for any reason (faulty assembly, need for re-work, etc.), production and time losses increase as the reflector cannot be reused. Accordingly, when service staff need to replace the LED bar or LED cable due to any malfunction, the reflector must be replaced since it cannot be reused after being removed, although there is no fault in the reflector.

In the state of the art United States Patent No. US8045091, a method for keeping the reflector fixed is disclosed. Accordingly, by using a fixing apparatus, the reflector and the LED bar are fixed by means of the holes on the LED bar.

In the state of the art Chinese Patent Application No. CN107238972, there are additional holes on the reflector for inserting the mounting apparatus, in addition to the LED holes in order to keep the reflector fixed.

In the state of the art Korean Patent Application No. KR20160016020, a reflector which provides homogeneous brightness on an LCD screen is disclosed.

In the state of the art Chinese Utility Model Document Application No. CN210515977, fixing housings are formed by leaving an opening at the level of the LED bar. These fixing housings are arranged between the two lenses.

The aim of the present invention is the realization of an image display device wherein the reflector is fixed correctly and completely on the back cover.

The image display device realized in order to attain the aim of the present invention, explicated in the first claim and the respective claims thereof, comprises at least one light source; a back cover having a first base whereon the light source is fixed and first side walls surrounding said first base; a reflector having a second base and second side walls surrounding said second base and having the same number of light source holes as the light source allowing the light source fixed on the back cover to pass to the other side of the reflector; at least two adjacent fixing holes on the second base on the reflector; and at least one fixing member fixed to the fixing holes and the second side walls.

In the preferred embodiment of the present invention, the fixing holes have a diameter of maximum 1 mm.

The fixing member is a rope or a narrow, flat and thin strip.

The two fixing holes are very close to each other, aligned horizontally, and forming a fixing group. The fixing member passes from the bottom of the reflector to the top of the reflector through a fixing hole, and reaches the bottom of the reflector again through the other fixing hole and passes to the other fixing group. In the preferred embodiment of the present invention, there are three fixing groups at the same level, that is, six fixing holes. In the embodiment of the present invention, there are nine fixing groups on the reflector such that there are three horizontal lines parallel to each other and three fixing groups on each.

In the embodiment of the present invention, the light sources are fixed on the back cover. The reflector is mounted on the back cover such that the light sources pass through the light source holes on the reflector. By means of the reflector, the rays emitted behind the LEDs used as light sources are reflected back, thus achieving a homogeneous image. When the reflector is mounted on the back cover, the first base of the back cover and the second base of the reflector remain almost on the same surface, below the uppermost points of the light sources.

Due to the position of the fixing member between the reflector and the back cover, the fixing member does not adversely affect the brightness, and ensures that the reflector is mounted correctly and smoothly, thus obtaining a homogeneous image.

In an embodiment of the present invention, the image display device comprises fastening members on the opposite first side walls. One end of each of the fixing members is oppositely attached to the fastening members on the first side walls.

As the image display device is placed in a vertical position, the fixing member is glued to prevent the same from falling, slipping or moving. Thus, the reflector comes closer to the back cover.

An image display device realized in order to attain the aim of the present invention is illustrated in the attached figures, where:
Figure 1 - is the perspective view of a back cover.
Figure 2 - is the exploded view of a reflector and the back cover.
Figure 3 - is the perspective view of the back cover and the reflector.
Figure 4 - is the front view of the back cover and the reflector.

The elements illustrated in the figures are numbered as follows.
1. Back cover
2. First base
3. First side wall
4. Reflector
5. Second base
6. Second side wall
7. Light source
8. Light source hole
9. Fixing hole
10. Fixing group
11. Fixing member

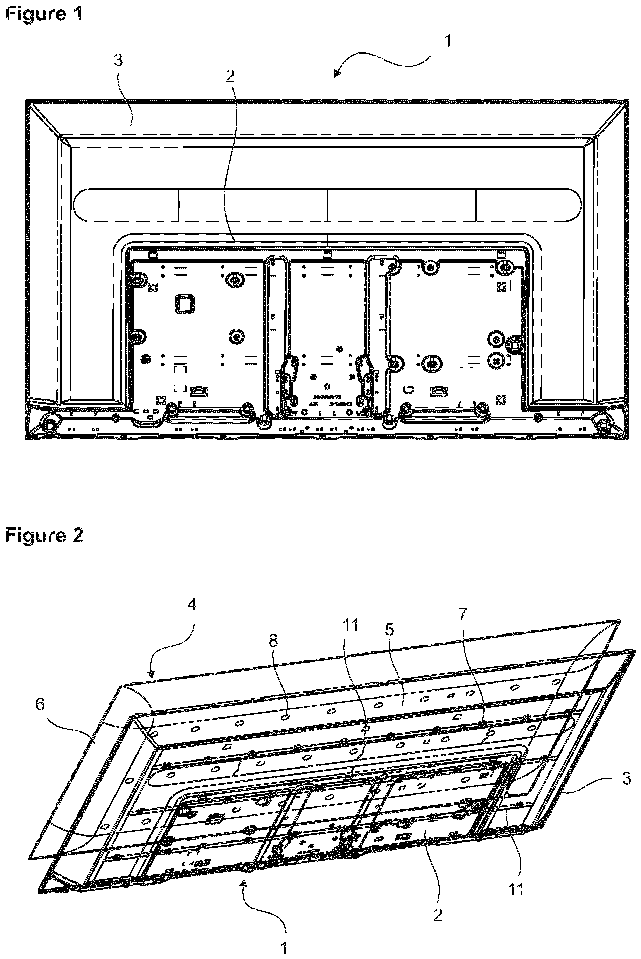

The image display device comprises at least one light source (7); a back cover (1) having a first base (2) whereon the light source (7) is fixed and first side walls (3) surrounding said first base (2); a reflector (4) having a second base (5) and second side walls (6) surrounding said second base (5) and having the same number of light source holes (8) as the light source (7) allowing the light source (7) fixed on the back cover (1) to pass to the other side of the reflector (4); at least two adjacent fixing holes (9) on the second base (5) on the reflector (4); and at least one fixing member (11) remaining between the reflector (4) and the back cover (1) and fixed to the fixing holes (9) and the second side walls (6) (Figure 1 and Figure 2).

In the preferred embodiment of the present invention, the fixing holes (9) have a diameter of maximum 1 mm, and are positioned at the same level in the horizontal axis.

In another embodiment of the present invention, the fixing member (11) is a rope.

In another embodiment of the present invention, the insulation element (11) is a strip. In this embodiment of the present invention, the fixing member (11) is in the form of a narrow, flat and thin strip.

In the preferred embodiment of the present invention, the light source (7) is a LED.

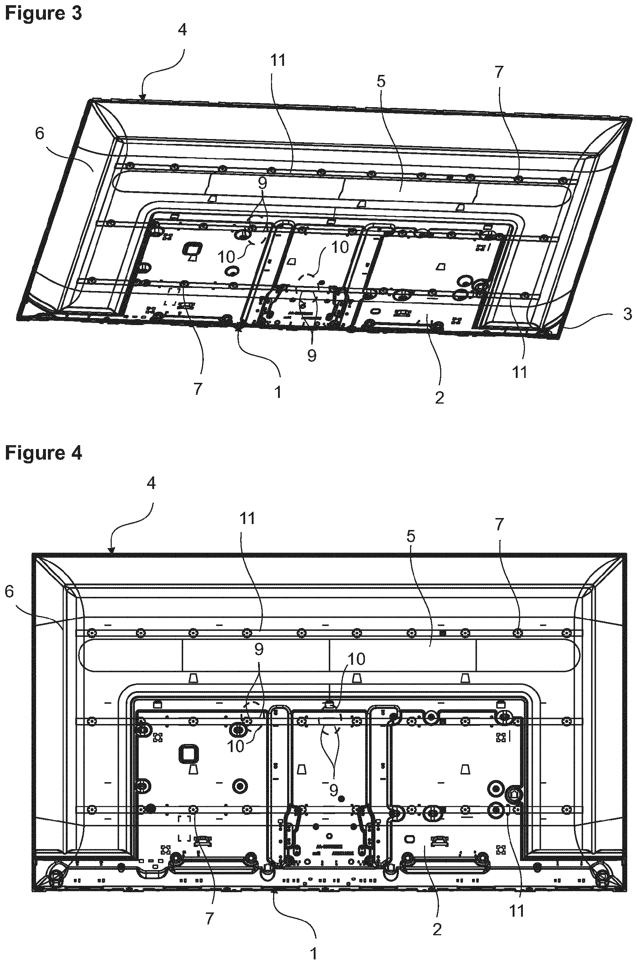

In an embodiment of the present invention, two adjacent fixing holes (9) in the same horizontal level form a fixing group (10). The fixing member (11) passes from the bottom of the reflector (4) to the top of the reflector (4) through a fixing hole (9), and reaches the bottom of the reflector (4) again through the other fixing hole (9) and passes to the other fixing group (10). In the preferred embodiment of the present invention, there are three fixing groups (10) at the same level, that is, six fixing holes (9). In the embodiment of the present invention, there are nine fixing groups (10) on the reflector (4) such that there are three horizontal lines parallel to each other and three fixing groups (10) on each (Figure 3 and Figure 4).

In the embodiment of the present invention, the light sources (7) are fixed on the back cover (1). The reflector (4) is mounted on the back cover (1) such that the light sources (7) pass through the light source holes (8) on the reflector (4). By means of the reflector (4), the rays emitted behind the LEDs used as light sources (7) are reflected back, thus achieving a homogeneous image. When the reflector (4) is mounted on the back cover (1), the first base (2) of the back cover (1) and the second base (5) of the reflector (4) remain almost on the same surface, below the uppermost points of the light sources (7).

Due to the position of the fixing member (11) between the reflector (4) and the back cover (1), the fixing member (11) does not adversely affect the brightness, and ensures that the reflector (4) is mounted correctly and smoothly, thus obtaining a homogeneous image.

In an embodiment of the present invention, the image display device comprises fastening members on the opposite first side walls (3). One end of each of the fixing members (11) is oppositely attached to the fastening members on the first side walls (3).

In another embodiment of the present invention, as the image display device is placed in a vertical position, the fixing member (11) is glued to prevent the same from falling, slipping or moving. Thus, the reflector (4) comes closer to the back cover (1).

In the preferred embodiment of the present invention, the image display device is a backlight image display device.

By means of the present invention, the reflector (4) is properly fixed on the back cover (1), eliminating the risk of operator error. Moreover, since the reflector (4) is properly fitted on the back cover (1), image quality is improved. Furthermore, in cases where the reflector (4) is required to be detached for any reason, the reflector (4) can be used again. Thus, savings in both component costs and time are provided.

## Claims

1. An image display device **comprising** at least one light source (7); a back cover (1) having a first base (2) whereon the light source (7) is fixed and first side walls (3) surrounding said first base (2); a reflector (4) having a second base (5) and second side walls (6) surrounding said second base (5) and having the same number of light source holes (8) as the light source (7) allowing the light source (7) fixed on the back cover (1) to pass to the other side of the reflector (4), **characterized by** at least two adjacent fixing holes (9) on the second base (5) on the reflector (4), and at least one fixing member (11) remaining between the reflector (4) and the back cover (1) and fixed to the fixing holes (9) and the second side walls (6).

2. An image display device as in Claim 1, **characterized by** the fixing holes (9) which have a diameter of maximum 1 mm

3. An image display device as in Claim 1 or Claim 2, **characterized by** the fixing holes (9) which are positioned at the same level in the horizontal axis.

4. An image display device as in Claim 1, **characterized by** the fixing member (11) which is a rope.

5. An image display device as in Claim 1, **characterized by** the fixing member (11) which is a strip.

6. An image display device as in Claim 1, **characterized by** the light source (7) which is a LED.

7. An image display device as in Claim 1, **characterized by** a fixing group (10) which is formed by two adjacent fixing holes (9) in the same horizontal level

8. An image display device as in Claim 7, **characterized by** three fixing groups (10) at the same level.

9. An image display device as in Claim 7 and 8, **characterized by** three horizontal lines parallel to each other and three fixing groups (10) on each.

10. An image display device as in Claim 1, **characterized by** fastening members provided on the opposite first side walls (3).

11. An image display device **characterized by** being of the backlight type.
